# FASCICULE DE BREVET EUROPEEN

(11) **EP 1 843 233 B1**
(45) Date de publication et mention de la délivrance du brevet: **15.12.2010**
(21) Numéro de dépôt: 07006925.7
(22) Date de dépôt: 03.04.2007
(51) Int. Cl.: G05D 1/02, G01S 5/16, G01S 5/18, G01S 17/87

(54) **Système de localisation et positionnement pour le guidage d'une entité mobile par rapport à un ou plusieurs autres objets**
Lokalisierungs- und Positionierungssystem zur Lenkung einer Mobileinheit in Bezug auf ein oder mehrere andere Objekte
Localisation and positioning system for guiding a mobile entity in relation to one or more other objects

(30) Priorité: 06.04.2006 FR 0603017
(43) Date de publication de la demande: 10.10.2007
(73) Titulaire: HITPOOL Systems, 92350 Le Plessis Robinson (FR)
(72) Inventeur: Louvel, Philippe, 92350 Le Plessis Robinson (FR)

(56) Documents cités:
- US-A- 4 026 654
- US-A- 5 815 825
- US-A1- 2003 191 602
- US-A1- 2005 190 427
- DURIEU C ET AL: "LOCALIZATION OF A MOBILE ROBOT WITH BEACONS TAKING ERRONEOUS DATA INTO ACCOUNT" PROCEEDINGS OF THE INTERNATIONAL CONFERENCE ON ROBOTICS AND AUTOMATION. SCOTTSDALE, MAY 15 - 19, 1989, WASHINGTON, IEEE COMP. SOC. PRESS, US, vol. VOL. 2, 15 mai 1989 (1989-05-15), pages 1062-1068, XP000076146 ISBN: 0-8186-1938-4

## Description

La présente invention concerne un système de localisation et positionnement pour le guidage d'une entité mobile par rapport à un autre objet (ou plusieurs autres objets), par coopération entre un émetteur-récepteur et une ou plusieurs balises.

Le dispositif émetteur-récepteur est muni d'un émetteur laser dont le faisceau balaye un angle solide large et d'un récepteur dont le but est de repérer la position d'une ou plusieurs balises. L'émetteur-récepteur télé-alimente à tour de rôle chaque balise qui est détectée dans son champ de vision.

Chaque balise est constituée d'un tore réflectif de repérage, d'un module de cellules photo-électriques apte à collecter l'énergie du faisceau laser et d'un émetteur à ultrasons qui répond à l'émetteur-récepteur par une trame ultrasonore qui permet de calculer la distance entre le capteur et la balise. La distance de fonctionnement d'un tel système est de quelques mètres, entre 5 et 10 mètres.

Ce système est destiné en particulier à être utilisé comme une aide à l'accostage des objets pour les engins de manutention, ou pour le guidage des robots mobiles, ou bien encore pour l'asservissement de position à distance entre deux engins mobiles.

### ART ANTERIEUR

Dans l'art antérieur on connaît des systèmes de localisation et de guidage basés sur le principe de balises (éléments de référence) actives qui émettent un signal plus ou moins complexe. Ce genre de balises existe dans la radionavigation maritime et aérienne (Systèmes VOR et ILS par exemple).

D'autres systèmes également basés sur des balises actives permettent de localiser et guider un engin mobile tel qu'un robot mobile, comme ceci est présenté dans les brevets US2005021178 et US2005137748.

De même le brevet DE10252647 propose de guider un engin de manutention par détection de position par rapport à une balise émettrice.

L'inconvénient de toutes ces solutions est que la ou les balises qui servent d'éléments de référence sont actives et doivent être alimentées par une source de tension permanente, comme par exemple une batterie, qu'il faut remplacer régulièrement. Beaucoup de travaux de recherche ont également été menés dans le domaine de la reconnaissance des formes pour le guidage des engins mobiles.

L'inconvénient de ces solutions est que la performance de la reconnaissance dépend de la qualité de l'éclairage et nécessite par ailleurs une puissance de calcul importante.

Il est également connu des méthodes de guidage par une infrastructure au sol comme le suivi d'un fil ou d'un bande de peinture. Mais ces méthodes nécessitent des travaux d'installation coûteux.

On connaît en outre du document US2003/0191602 un système utilisant une pluralité de balises télé-alimentées et intégrées au sol pour l'acquisition de la position d'un robot mobile. Cependant ce système présente l'inconvénient que le robot mobile doit être au voisinage immédiat de la balise pour que celle-ci lui communique son identifiant, identifiant qui contient sa position physique. De plus, il est connu du document US2005/0190427 un moyen de télé-alimenter un objet distant par un faisceau laser orientable.

### BREVE DESCRIPTION DE L'INVENTION

L'invention dévoilée ici permet de proposer de nouvelles solutions pour la localisation et le guidage des engins mobiles.

La présente invention propose un système de localisation et guidage nouveau, résolvant les inconvénients des systèmes connus dans l'art antérieur, tout en bénéficiant d'un compromis économique très performant.

Le système dévoilé par l'invention comprend :
- au moins un dispositif émetteur-récepteur positionné sur l'entité mobile, qui est l'élément actif du système.
- une ou plusieurs 'balises', éléments de référence du système, qui sont les éléments réactifs du système, ces balises étant positionnées sur des éléments fixes ou mobiles.
- un dispositif de contrôle pilotant le dispositif émetteur-récepteur, donnant les coordonnées des balises et leur évolution dans le temps pour en déduire des consignes de guidage

Selon l'invention, le dispositif émetteur-récepteur (10) comprend :
- une diode laser qui génère un faisceau laser d'émission de lumière cohérente
- des miroirs mobiles aptes à diriger ce faisceau vers l'extérieur dans un angle solide appelé 'champ de vision' de l'émetteur-récepteur
- un récepteur sensible à la lumière laser qui reçoit la réflexion du faisceau sur divers objets par le chemin de retour au travers des mêmes miroirs mobiles.
- un récepteur à ultrasons, apte à recevoir les signaux ultrasons des balises
Le champ de vision est un angle solide assez ouvert pour repérer toutes les balises présentes dans la zone en vis-à-vis.

Selon l'invention, chaque balise (20) comprend :
- un anneau torique réflectif qui va permettre le repérage de la position de la balise par le dispositif émetteur-récepteur, grâce à ses propriétés réfléchissantes omnidirectionnelles
- Une zone de diodes photo-électriques, chargées de collecter l'énergie de télé-alimentation et de détecter la trame de synchronisation
- Un émetteur à ultrasons
- Un circuit de commande local, alimenté par le faisceau lumineux incident, qui génère en retour une trame ultrasons suite à la réception d'une trame de synchronisation.

Selon l'invention, le dispositif de contrôle (30) comprend les moyens de pilotage et de calcul. Les fonctions suivantes sont effectuées cycliquement :
a- Balayage du champ de vision par scanning
b- Enregistrement des positions des tores
c- Focalisation sur une balise et télé-alimentation
d- Transmission d'un signal de synchro
e- Réception de la réponse ultrasons
f- Calcul de la distance et mise à jour de la position de la balise
si une autre balise a été détectée, alors les étapes c-/ à f-/ sont répétées pour chaque balise.

Pour chacune des balises, le dispositif de contrôle enregistre les coordonnées courantes après chaque balayage, ces coordonnées comprenant deux angles et une distance.

### DESCRIPTION DETAILLEE DE L'INVENTION

L'invention sera mieux comprise à la lecture de la description qui suit, se référant à un exemple non limitatif, illustré par les dessins suivants :
- La **figure 1** représente une vue générale du système avec un émetteur-récepteur et une balise
- Les **figures 2a et 2b** représentent la balise vue de face et de profil avec ses principaux constituants
- La **figure 3** représente l'émetteur-récepteur dans le mode de réalisation où de balayage est cartésien (azimut et site)
- La **figure 4** représente le processus de balayage et de repérage des tores des balises dans le mode de réalisation où le balayage est cartésien (azimut et site)
- La **figure 4a** représente le processus de sélection des échos de balises et l'interpolation qui consiste à calculer les coordonnées du faisceau de télé-alimentation nécessaire pour exciter la balise
- La **figure 5** représente l'émetteur-récepteur dans le mode de réalisation où le balayage est polaire (longitude et latitude)
- La **figure 6** représente le processus de balayage et de repérage des tores des balises dans le mode de réalisation où le balayage est polaire (longitude et latitude)
- Les **figures 7a et 7b** représentent l'évolution dans le temps des différentes positions successives d'une balise
- La **figure 8** représente un diagramme de séquence sous forme de chronogramme pour le balayage, l'alimentation à distance d'une balise et la séquence de trame ultrasons de cette balise
- La **figure 9** représente un diagramme du schéma de principe électrique du circuit de commande du dispositif émetteur-récepteur
- La **figure 10** représente une vue d'ensemble du système avec un émetteur-récepteur et deux balises
- La **figure 10a** représente un diagramme de séquence sous forme de chronogramme pour le balayage, l'alimentation à distance et la séquence de trame ultrasons pour les deux balises présentes dans le champ de vision

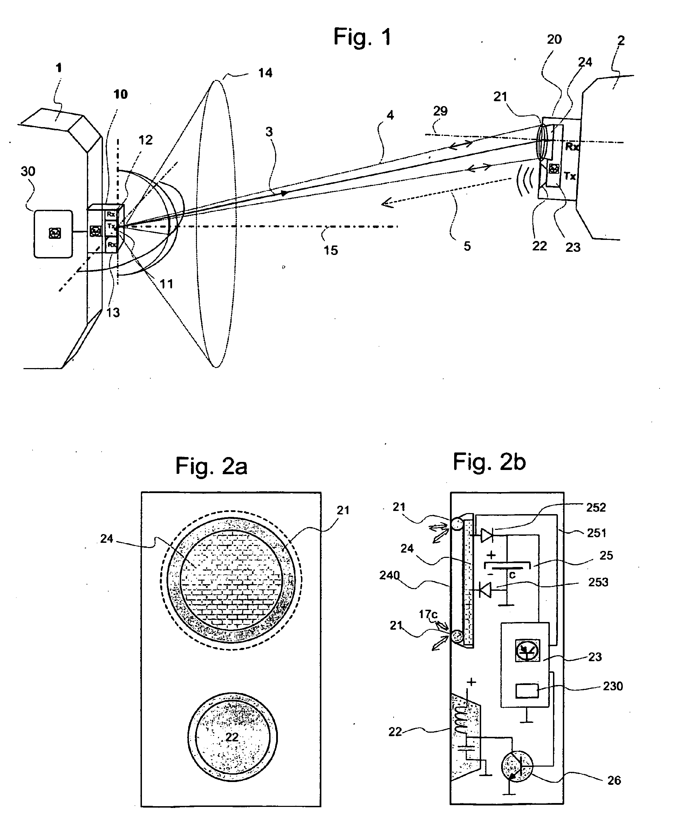

La figure 1 montre une vue d'ensemble du mode de réalisation préféré du système selon l'invention. L'entité 1 est l'entité mobile sur laquelle est fixé l'émetteur-récepteur 10. L'objet 2 est l'élément qui porte la balise 20.

Un faisceau laser est créé par une diode laser dans la partie émission 11. Des miroirs mobiles permettent de modifier l'orientation du faisceau et de faire un balayage ou 'scanning' de l'ensemble du champ de vision qui est l'angle solide 14 autour de la ligne de visée 15. Certains éléments situés dans le champ de vision réfléchissent le signal incident et un faisceau écho part dans le sens opposé pour revenir vers la partie réception 12 de l'émetteur-récepteur 10. Les balises ont la caractéristique de générer un écho de réflexion 4 qui a une forme de cercle ou d'ellipse en fonction de leur orientation 29, et c'est cela qui permet de les distinguer parmi les autres échos perçus par le récepteur (autres objets réfléchissants situés dans le champ de vision).

Une fois le balayage terminé, un calcul est effectué sur les échos, et les signaux correspondants à la réflexion de l'anneau torique 21 de la balise, permettent de déduire les coordonnées angulaires de la balise. Le circuit de commande dirige alors le faisceau laser 3 vers le centre du tore de la balise ainsi repérée. De cette façon, une alimentation électrique à distance est transmise et captée par les cellules photoélectriques 24 de la balise.

Le circuit de commande de la balise 23 est alors mis en fonctionnement par la télé-alimentation. Il capte dans le signal incident la trame de synchronisation et renvoie une réponse 5 en utilisant son émetteur ultrason 22. Cette trame ultrasonique comporte en outre un signal codé qui permet d'identifier la balise. Cette trame ultrasons 5 est reçue par le récepteur ultrason 13 de l'émetteur-récepteur. Le temps écoulé entre l'émission de la trame de synchronisation laser et la réception de la trame ultrason est proportionnel à la distance qui sépare le émetteur-récepteur de la balise.

Les coordonnées angulaires, complétées par l'information distance, donnent de façon non ambiguë la position de la balise par rapport à l'entité mobile.

Le suivi de l'évolution dans le temps de cette position permet aisément de fournir des consignes de guidage pour par exemple s'approcher de l'objet 2 selon la perpendiculaire 29.

Les **figures 2a et 2b** montrent respectivement une vue de face et une vue de profil de la balise.

Les 2 principaux éléments de la face de la balise sont :
- l'anneau torique réflectif 21, apte à réfléchir les signaux lumineux quelque soit la direction de du signal incident 17c
- l'émetteur à ultra-sons 22 apte à émettre des signaux ultrasonores

Le disque intérieur de l'anneau torique contient une face transparente 240 qui protège l'intérieur de la balise de l'environnement extérieur. En retrait de cette face transparente se trouve un disque tapissé de cellules photo-électriques 24. Ces cellules photo-électriques 24 sont aptes à collecter l'énergie du faisceau laser incident dans le phase de télé-alimentation. Les diodes 252 et 253 canalisent le courant issu des cellules photo-électriques dans le condensateur C (25). Lorsque le faisceau laser reste focalisé sur la balise, la tension aux bornes du condensateur et sa charge augmentent, jusqu'à alimenter le circuit de commande local 23. Ce circuit de commande reçoit également le signal brut en provenance des diodes photo-électriques, avant le filtrage par la capacité, ceci par la liaison 251.

Dès que le circuit est suffisamment chargé, une impulsion codée simple est générée sur l'émetteur ultrasons 22 au moyen du transistor 26. Ce signal (dit de 'réveil') est reçu par le récepteur 13 de l'émetteur-récepteur 10. Celui-ci génère alors un pulse de synchronisation superposé dans le faisceau laser incident.

Ce pulse de synchronisation, reçu dans le circuit de commande 23 par la liaison directe 251, est le signal temporel pour que le circuit de commande 23 génère la trame ultrasonore sur l'émetteur 22. Cette trame ultrasonore contient les éléments d'identification de la balise, qui sont stockés dans la mémoire non volatile 230. Cette identification précise par exemple le type de la balise et son numéro unitaire. Après la réception de cette trame ultrasonore d'identification, la télé-alimentation par le faisceau incident cesse et le condensateur se décharge. L'avantage de cette solution est qu'il n'y a pas besoin de source d'énergie permanente dans la balise, et donc aucun entretien n'est nécessaire et la durée de vie est illimitée.

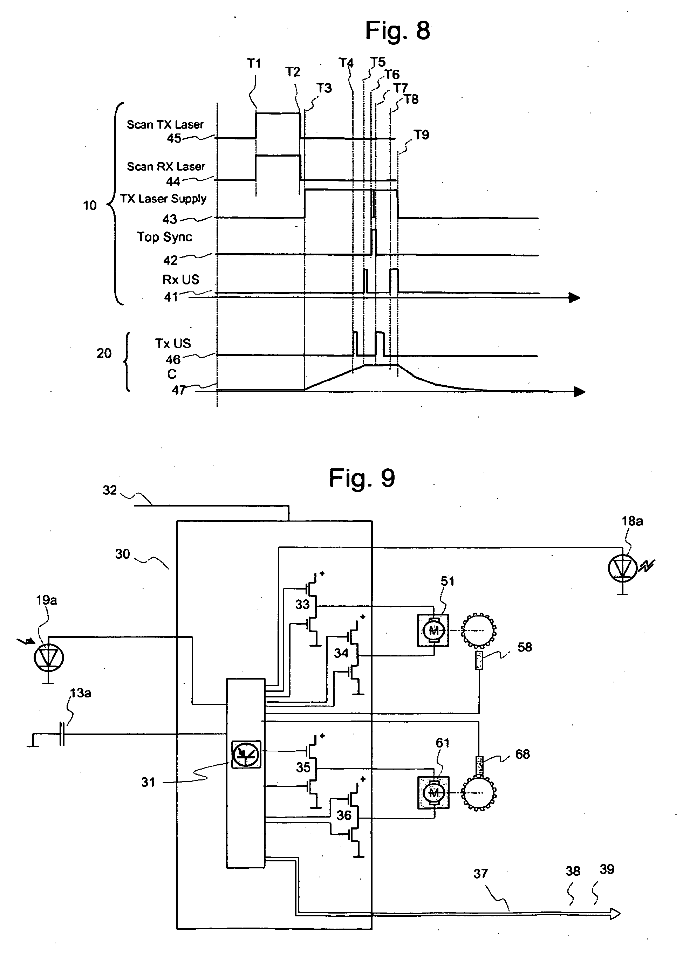

Les aspects temporels sont repris des les chronogrammes des figures 8 et 11.

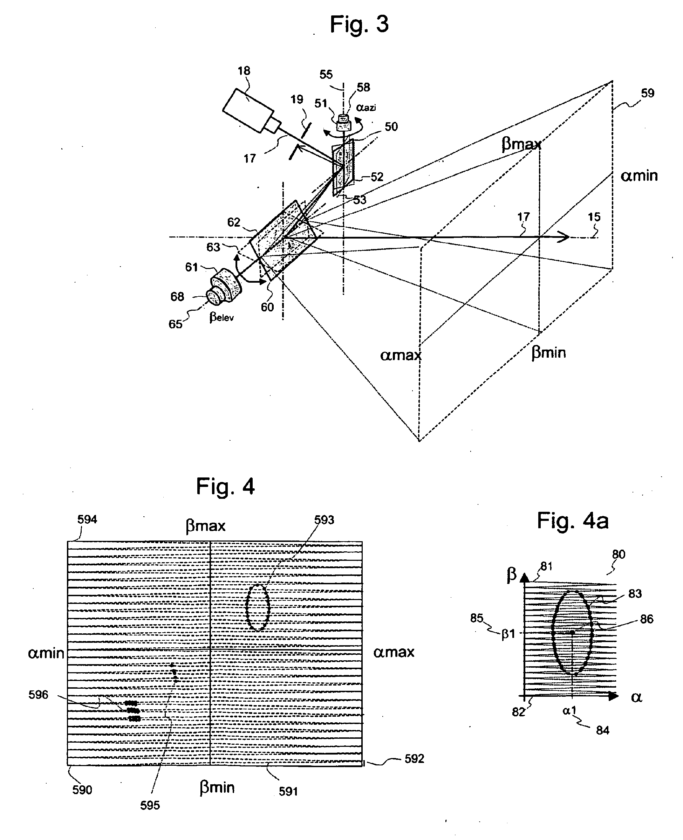

La **figure 3** montre un des modes de réalisation du balayage. Dans ce cas, il s'agit d'un balayage cartésien, avec 2 angles de pilotage, l'angle α baptisé 'azimut' et l'angle β baptisé 'site' ou 'élévation'.

Le faisceau laser est issu de la diode laser 18. Le faisceau est dirigé vers le centre du miroir 50. Ce miroir tourne autour de l'axe 55, il est orienté par un petit moteur électrique 51 fixé sur un bâti (non représenté). Un capteur de position angulaire 58 est également entraîné par la rotation du miroir et rend compte de la position angulaire du miroir entre les positions extrêmes αmin 52 et αmax 53.

Le faisceau rebondit sur le miroir 50 et est ainsi dirigé vers le second miroir 60. Ce miroir tourne autour de l'axe 65, il est orienté par un petit moteur électrique 61 fixé sur un bâti (non représenté). Un capteur de position angulaire 68 est également entraîné par la rotation de ce second miroir et rend compte de la position angulaire du miroir entre les positions extrêmes βmin 62 et βmax 63.

En fonction de l'orientation du premier miroir, le point de réflexion sur le miroir 60 évolue selon une droite confondue avec l'axe 65. A la sortie du miroir 60, le faisceau se situe à l'intérieur du rectangle 59, dont le centre croise la ligne de visée principale 15.

Les échos générés par les objets impactés par le faisceau laser 17 parcourent le chemin en sens inverse et au moyen des miroirs 60 et 50 se retrouvent sur la plaque réceptrice 19. Cette plaque possède un trou en son centre pour laisser passer le faisceau incident 17. Les signaux collectés par les photo-diodes de la plaque réceptrice 19 sont dirigés vers le circuit de commande 30.

Le processus de balayage décrit ici est très semblable au processus utilisé par les lecteurs de code-barres des supermarchés qui sont maintenant très courants et très fiables.

La **figure 4** montre le processus de balayage et de repérage des tores des balises dans le mode de réalisation où de balayage est cartésien (azimut α et site β). Le circuit de commande 30 pilote l'orientation des miroirs de façon à 'quadriller' tout le champ de vision en faisant parcourir l'angle α de αmin à αmax pendant que β parcourt un très petit angle 592 : ainsi une ligne quasiment horizontale 591 est créée. Ensuite le circuit de commande 30 inverse le sens de commande du moteur 51 et α passe de αmax à αmin, pendant que le pilotage du moteur 61 pour orienter le miroir 60 reste identique. Le processus de balayage se produit selon le même principe, N lignes horizontales étant créées pendant que l'angle de site β parcourt toute sa plage de βmin (590) à βmax (594).

Le miroir 50 étant petit, il présente peu de moment d'inertie et peut donc être piloté de façon très dynamique. Les plages angulaires maximum (αmin, αmax βmin, βmax) et le nombre de lignes N définissent l'angle solide parcouru ainsi que la densité des points balayés.

Lorsque le miroir 60 a parcouru toute sa course de βmin (590) à βmax (594), le balayage est terminé, et les échos sont analysés par le circuit de commande et le traitement du signal fait apparaître la 'trace' 593 d'une balise présente dans le champ de vision, et élimine d'autres échos ne se présentant pas sous la forme d'ellipse comme les échos 595 et 596.

La **figure 4a** représente plus particulièrement le processus de sélection des échos de balises. Après le balayage principal, un ou plusieurs échos ayant la forme d'ellipse ou cercle sont repérés et sont donc potentiellement des balises présentes dans le champ de vision.

Dans le cas où un écho se présente sous la forme très nette d'une ellipse, le circuit de commande procède à l'interrogation de cette balise en focalisant le faisceau laser sur le centre de l'ellipse 86. Dans certains autres cas, un deuxième processus de scanning focalisé sur ces échos 'candidats' peut être nécessaire pour lever l'incertitude. Un balayage plus fin et restreint à la zone 80 autour de l'écho à 'zoomer' débute au point 81 et se termine au point 82. L'écho détaillé 83 est alors analysé par le circuit de commande 30 et le calcul de la position du milieu de la balise donne les coordonnées angulaires α1 (84) et β1 (85), ce qui correspond au point 86. Ces coordonnées angulaires sont donc enregistrées comme étant la position du centre de la balise, et le circuit de commande dirige le faisceau de télé-alimentation sur le point 86.

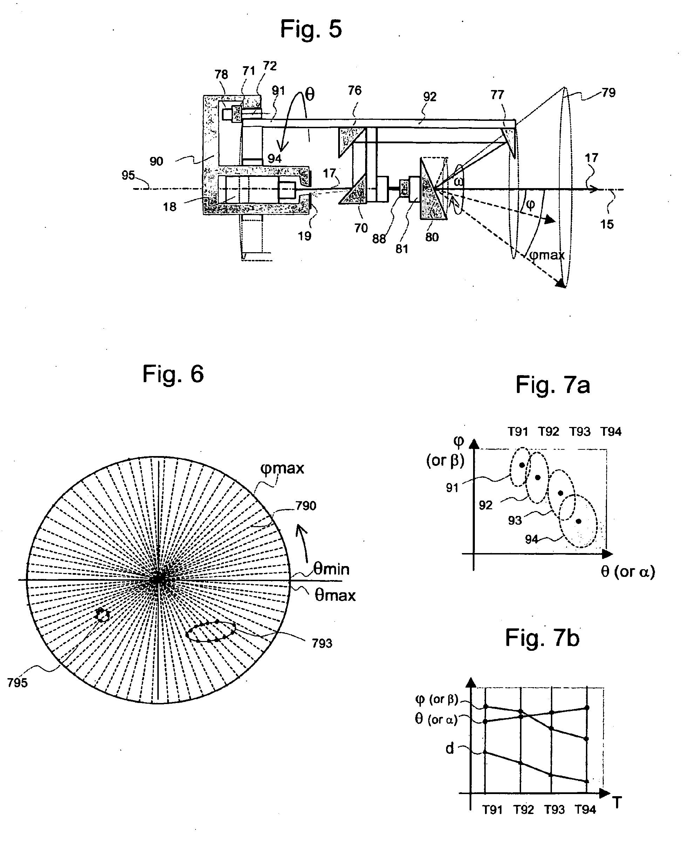

La **figure 5** représente l'émetteur-récepteur dans le mode de réalisation où le balayage est polaire (longitude et latitude). Dans cette variante de réalisation, le dispositif d'émission comporte une diode d'émission 18 du faisceau laser 17, fixé dans le bâti fixe 90. Un support multifonction 91 tourne autour de ce bâti, grâce aux paliers 94. L'axe de rotation du support 91 est l'axe 95. Trois miroirs 70, 76 et 77 sont fixés sur ce support 91. Le faisceau 17 rebondit successivement sur les miroirs 70, 76 puis 77 pour se retrouver sur un autre miroir 80, qui tourne lui aussi autour de l'axe 95, mais indépendamment du support 91.

La rotation du support 91 autour de l'axe 95 représente la longitude θ, et la rotation ω du miroir 80 donne la latitude ϕ.

La première rotation, celle du support 91 portant les miroirs 70, 76 et 77, est engendrée par le moteur 71. Un capteur de position angulaire 78 rapportant le position angulaire θ est solidaire de l'axe du moteur 71.

La deuxième rotation, celle du miroir 80 est engendrée par le moteur 81. Un capteur de position angulaire 88, rapportant la position angulaire ω rapport au support 91, est solidaire de l'axe du moteur 81. L'angle ϕ de latitude est directement proportionnel à l'angle ω : ϕ passe de 0° à ϕmax lorsque ω passe de 0° à 180°.

Le signal lumineux réfléchi par les objets impactés par le faisceau laser 17 parcourent le chemin en sens inverse et au moyen des miroirs 80, 77, 76 et 70 se retrouvent sur la plaque réceptrice 19. Cette plaque possède un trou en son centre pour laisser passer le faisceau incident 17. Les signaux collectés par les photo-diodes sont dirigés vers le circuit de commande 30.

La ligne de visée principale 15 de l'émetteur-récepteur est colinéaire avec l'axe de rotation principal 95.

L'angle solide balayé par le dispositif est 79.

La **figure 6** représente le processus de balayage et de repérage des tores des balises dans le mode de réalisation où le balayage est polaire (longitude et latitude)

Le circuit de commande 30 pilote l'orientation des miroirs de façon à parcourir tout le champ de vision en générant des rayons partant du centre (qui correspond à la ligne de visée 15). Pour un angle θ donné, ou variant très peu, l'angle ω fait un demi-tour (180°) et le faisceau 17 parcourt un rayon 790 de ϕ=0 jusqu'à ϕmax. Pendant le demi tour suivant du miroir 80, ϕ repasse de ϕmax à 0 parcourant un rayon très proche.

Le miroir 80 étant petit, il présente peu de moment d'inertie et peut donc être piloté de façon très dynamique. La plage angulaire maximum ϕmax et le nombre de rayons N définissent l'angle solide parcouru ainsi que la densité des points balayés.

Lorsque le miroir 80 a parcouru toute sa course de θmin (0°) à θmax (360°), le balayage est terminé, et les échos sont analysés par le circuit de commande et le traitement du signal fait apparaître la 'trace' 793 d'une balise présente dans le champ de vision, et d'une autre balise potentielle 795.

Comme expliqué précédemment, une balayage restreint dans la zone de chacune des balises potentielles 793 et 795 peut être nécessaire pour confirmer ou infirmer l'écho légitime d'une balise.

Les **figures 7a et 7b** représentent l'évolution dans le temps des différentes positions successives d'une balise. Au cycle T91, la balise a été repérée à l'emplacement 91. Au cycle T92, la balise a été repérée à l'emplacement 92. Au cycle T93, la balise a été repérée à l'emplacement 93. Au cycle T94, la balise a été repérée à l'emplacement 94. De même les distances mesurées 'd' à chaque cycle sont enregistrées. La figure 7b illustre l'évolution des 3 coordonnées (les 2 angles et la distance d) de la balise en fonction du temps. Ceci représente l'évolution de la position de l'entité mobile par rapport à la balise et par conséquent permet de donner des consignes pour le cas échéant corriger la trajectoire de l'entité mobile.

Par ailleurs, le circuit de commande 30 peut optimiser la recherche des balises dans le processus de balayage, en utilisant les information récoltées lors des cycles précédents : une balise ayant été identifiée a une grande probabilité d'être encore dans le voisinage immédiat le cycle suivant.

Plus la balise est proche, plus le repérage est facile car le signal écho est de grande taille et la diffraction plus faible.

La **figure 8** représente un diagramme de séquence sous forme de chronogramme pour le balayage, l'alimentation à distance d'une balise et la séquence de trame ultrasons de cette balise.

Dans ce graphique, il est représenté, pour l'émetteur-récepteur : l'émission laser 45 de scanning, la réception laser 44, la télé-alimentation 43, le signal de synchronisation laser 42 et la réception ultrason 41. Pour la balise 20, il est représenté la transmission ultrason 46 et la charge du condensateur 47.

La phase de balayage laser, comme décrite précédemment, commence à l'instant T1 et se termine à l'instant T2. A l'instant T3 la phase de télé-alimentation commence. Le condensateur se charge à partir de cet instant T3. Lorsque la charge est suffisante et que le circuit de commande local est suffisamment alimenté, alors la balise émet un premier signal ultrasonore de réveil, à l'instant T4. Ce signal de réveil est un code simple. Ce signal est reçu à l'instant T5 par l'émetteur récepteur 10. Suite à cet événement, le signal laser incident est modulé par un signal de synchronisation, émis à l'instant T6. Ce signal de synchronisation est décodé par le circuit de commande de la balise 23, qui renvoie immédiatement une trame ultrasonore d'identification de la balise, à l'instant T7. Ce signal est reçu par l'émetteur-récepteur à l'instant T8.

La différence entre T7 et T8 permet de calculer la distance entre la balise et l'émetteur-récepteur. A l'instant T9, la télé-alimentation cesse et le condensateur C commence à se décharger.

La **figure 9** représente un diagramme du schéma de principe électrique du circuit de commande 30 du dispositif émetteur-récepteur dans le cas du balayage cartésien, le schéma étant similaire dans le cas du balayage polaire. On y retrouve les capteurs et actuateurs déjà mentionnés : La diode laser 18a, la photo-diode de détection des échos lumineux 19a, Le récepteur ultrasonore 13a. Un microcontrôleur 31 assure toutes les tâches de calcul et d'interface avec les entrées et les sorties. Par ailleurs le circuit de commande nécessite une alimentation électrique extérieure 32.

Le circuit de commande active des ponts en H (33 et 34, 35 et 36) pour piloter le moteur 51 du premier axe de rotation α (ou θ dans le cas polaire) et le moteur 61 du deuxième axe de rotation β (ou ω dans le cas polaire). Le capteur 58 donne l'information de la position angulaire du premier axe de rotation. Le capteur 68 donne l'information de la position angulaire du deuxième axe de rotation.

Le circuit de commande transmet au travers d'un bus de communication 37 :
- soit des coordonnées brutes 38 pour exploitation par un autre calculateur (non représenté) en charge de la fonction guidage et affichage
- des consignes de guidage 39 dans la cas où le microcontrôleur assure également la fonction guidage lorsque celle-ci est simple

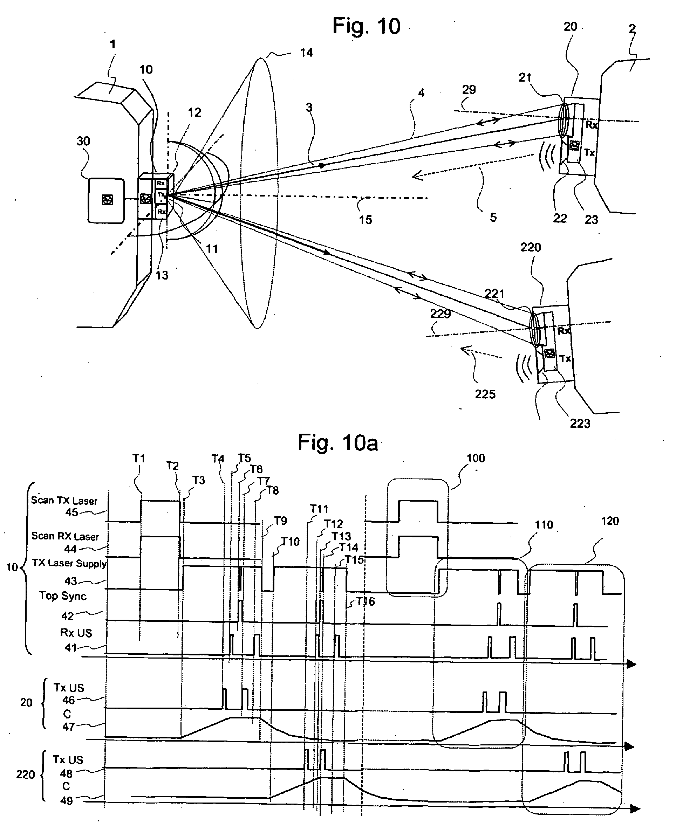

La **figure 10** représente une vue d'ensemble du système avec un émetteur-récepteur et deux balises.

Un émetteur-récepteur 10 a dans son champ de vision 2 balises, 20 et 220.

Le principe de balayage a été décrit précédemment. Comme 2 balises sont détectées dans le champ de vision, l'émetteur-récepteur va interroger séquentiellement les 2 balises. Tout d'abord, le circuit de commande 30 opère la télé-alimentation de la balise 20, attend le signal de réveil, émet le top synchro, et attend la trame d'identification ultrasonore. Ensuite, le circuit de commande 30 répète toutes ces opérations pour la deuxième balise.

Ce système permet tout à fait d'interroger plus de 2 balises, en fonction de l'application, le principe reste le même, seul le temps pour interroger séquentiellement toutes les balises présentes est un peu plus long.

Avec 2 balises ou plus, le circuit de commande peut déterminer plus rapidement par triangulation la position et l'orientation de l'entité mobile par rapport à l'objet de référence qui porte les balises.

La **figure 10a** représente un diagramme de séquence sous forme de chronogramme pour le balayage, l'alimentation à distance et la séquence de trame ultrasons pour les deux balises présentes dans le champ de vision, sur une durée de 2 cycles complets.

La phase de balayage laser, comme décrite précédemment, commence à l'instant T1 et se termine à l'instant T2. A l'instant T3 la phase de télé-alimentation de la première balise 20 commence. Le condensateur de la balise 20 se charge à partir de cet instant T3. Lorsque la charge est suffisante et que le circuit de commande local est suffisamment alimenté, alors la balise émet un premier signal ultrasonore de réveil, à l'instant T4. Ce signal de réveil est un code simple. Ce signal est reçu à l'instant T5 par l'émetteur récepteur 10. Suite à cet événement, le signal laser incident est modulé par un signal de synchronisation, émis à l'instant T6. Ce signal de synchronisation est décodé par le circuit de commande de la balise 23, qui renvoie immédiatement une trame ultrasonore d'identification de la balise, à l'instant T7. Ce signal est reçu par l'émetteur-récepteur à l'instant T8.

La différence entre T7 et T8 permet de calculer la distance entre la balise et l'émetteur-récepteur. A l'instant T9, la télé-alimentation cesse et le condensateur C commence à se décharger.

Ensuite, l'émetteur-récepteur passe à la balise suivante 220. A l'instant T10 la phase de télé-alimentation de la deuxième balise 220 commence. Le condensateur de la balise 220 se charge à partir de cet instant T10. Lorsque la charge est suffisante et que le circuit de commande local est suffisamment alimenté, alors la balise émet un premier signal ultrasonore de réveil, à l'instant T11. Ce signal de réveil est un code simple. Ce signal est reçu à l'instant T12 par l'émetteur-récepteur 10. Suite à cet événement, le signal laser incident est modulé par un signal de synchronisation, émis à l'instant T13. Ce signal de synchronisation est décodé par le circuit de commande de la balise 23, qui renvoie immédiatement une trame ultrasonore d'identification de la balise, à l'instant T14. Ce signal est reçu par l'émetteur-récepteur à l'instant T15. A l'instant T16, la télé-alimentation cesse et le condensateur C commence à se décharger.

La suite du chronogramme montre le cycle de balayage suivant. On retrouve le cycle de balayage (phase 100), la phase d'interrogation de la première balise 110, ), la phase d'interrogation de la deuxième balise 120.

### AVANTAGES DE L'INVENTION

Selon l'invention, les balises sont rustiques, bon marché, et sans source d'énergie locale, donc elles ne nécessitent aucun entretien même sur une longue durée, leur durée de vie n'est pas limitée

Elles peuvent être installées à demeure sur une multitude d'objets.

L'émetteur-récepteur est quant à lui monté sur l'objet mobile actif. C'est dans l'émetteur-récepteur que réside la majorité du coût et de la complexité du système, mais en général, il y a une multiplicité de balises pour un seul émetteur-récepteur, ce qui rend la solution optimale du point de vue économique.

Par ailleurs, deux termes sont proposés pour désigner les éléments clés du système :

Le dispositif émetteur-récepteur est appelé 'scansoreye' (comme la contraction des termes 'scanning', 'sensor' et 'eye'). La balise est appelée 'transmarker' (comme la contractionde 'transponder' et 'marker').

Une des applications typiques de l'invention est l'aide à l'enfourchage de containers par des engins de manutention.

Une autre application type est l'aide à l'accostage au quai pour des engins mobiles (camions, bateaux, bus aéroportuaires,...). Là encore, des balises sont positionnées sur tous les points d'accostage possibles et un seul émetteur-récepteur est porté par l'engin mobile.

Selon l'invention, les miroirs mobiles meuvent être remplacés par un hologramme tournant, ceci ne concerne que la méthode pour balayer l'angle solide en face de l'émetteur-récepteur.

Le tableau suivant présente une liste des applications potentielles de l'invention :

| Entité mobile | Objets de référence portant les balises | Fonctions réalisées |
|---|---|---|
| Chariot à fourche | containers | Aide à l'enfourchage |
| Passerelle de terminal aéroportuaire | Entourage de la porte des avions | Guidage pour accostage avant ouverture des portes |
| Tracteur agricole | Outils de machinisme agricole | Aide à l'attelage |
| Automobile | Rail latéral | Guidage latéral pour suivi de trajectoire |
| Camion ou camion semi-remorque | Quai de déchargement | Aide au recul pour accostage au quai |
| Camion | Benne mobile | Aide au recul pour dépose ou reprise |
| Navire ferry-boat ou porte-containers | Quai d'accostage | Aide au positionnement à quai |
| Bus élévateur de terminal aéroportuaire | Quai d'accostage | Aide au positionnement à quai |
| Avion A | Avion B | Ravitaillement en vol |

## Revendications

1. Système de localisation et guidage pour entité mobile comprenant :
- au moins un dispositif émetteur-récepteur (10) positionné sur l'entité mobile (1),
- au moins une 'balise' (20), positionnée sur un élément fixe ou mobile (2),
- au moins une interaction (3,4,5) entre l'émetteur-récepteur (10) et la balise (20), le dispositif émetteur-récepteur (10) comprenant un moyen de transmission de lumière cohérente laser (3) dont l'orientation est pilotée par des moyens de commande,
la balise (20) étant uniquement alimentée à distance par ledit moyen de transmission directif laser (3) de l'émetteur-récepteur (10), et ladite balise (20) ne possédant pas de source d'alimentation électrique propre,
**caractérisé en ce que** ladite au moins une interaction (3,4,5) comprend la combinaison de
- la réception par la balise (20) d'un signal laser (3) émis par ledit dispositif émetteur-récepteur (10), et
- la réception par ledit dispositif émetteur-récepteur (10) d'un signal ultrasonore (5) transmis par la balise(20) en réponse audit signal laser (3),
et **en ce que** l'interaction (3,4,5) entre ledit émetteur-récepteur (10) et ladite balise (20) permet de déterminer la position de l'entité mobile (1) par rapport à ladite balise (20), ladite position étant connue par :
- la position angulaire du faisceau laser et
- la distance séparant ledit émetteur-récepteur (10) de ladite balise (20), ladite distance étant déduite de la position temporelle de la réception par ledit émetteur-récepteur (10) dudit signal ultrasonore (5) transmis par la balise (20).

2. Système de localisation et guidage pour engin ou entité mobile selon la revendication 1, **caractérisé en ce que**
- la balise (20) est pourvue d'un élément réfléchissant (21) présentant un écho lumineux caractéristique et omnidirectionnel (4) apte à être reconnu parmi les autres échos,
- le dispositif émetteur-récepteur (10) comprend des moyens de réception aptes à identifier cet écho.

3. Système de localisation et guidage pour engin ou entité mobile selon la revendication 2, **caractérisé en ce que** l'élément réfléchissant (21) de la balise a une forme de tore.

4. Système de localisation et guidage pour engin ou entité mobile selon l'une des revendications 1 à 3, **caractérisé en ce qu'**il comprend une pluralité de balises (20) et que le dispositif émetteur-récepteur (10) est apte à avoir des interactions (3,4,5) tour à tour avec chaque balise (20) de ladite pluralité de balises.

5. Système de localisation et guidage pour engin ou entité mobile selon l'une quelconque des revendications 1 à 4, **caractérisé en ce que** le dispositif émetteur-récepteur (10) comprend des moyens de commande réalisant un balayage périodique d'un angle solide ouvert (14) afin d'identifier l'écho d'une ou plusieurs balises (20).

6. Système de localisation et guidage pour engin ou entité mobile selon l'une quelconque des revendications 1 à 5, **caractérisé en ce que** l'interaction (3,4,5) entre l'émetteur-récepteur (10) et la balise (20) comprend en outre :
- un signal de synchronisation (42,T6) dans la transmission du faisceau de lumière cohérente laser (17,3,4)
- un élément d'identification (46,T7) de la balise (20) dans les signaux ultrasonores (5).

7. Système de localisation et guidage pour engin ou entité mobile selon l'une quelconque des revendications 1 à 6, **caractérisé en ce que** le dispositif émetteur-récepteur (10) est pourvu de miroirs (50,60;70,80) montés sur des mouvements pilotés aptes à diriger le faisceau incident (17) dans tout l'angle solide (14) constituant le champ de vision de l'émetteur-récepteur (10).

8. Système de localisation et guidage pour engin ou entité mobile selon l'une quelconque des revendications 1 à 7, **caractérisé en ce que** chaque balise (20) est pourvue de :
- un élément réfléchissant (21) présentant un écho caractéristique et omnidirectionnel (4) apte à être reconnu parmi les autres échos
- des moyens photoélectriques (24) de conversion d'énergie lumineuse reçue en énergie électrique
- une capacité réservoir (25) de stockage électrique temporaire
- un émetteur ultrasonore (22)
- un circuit de commande (23) traitant la réception des signaux lumineux et la transmission des signaux ultrasonores
- une mémoire non volatile (230) contenant les éléments d'identification de la balise.

9. Procédé de commande pour un système de localisation et guidage pour engin ou entité mobile selon l'une quelconque des revendications 2 à 8, **caractérisé en ce qu'**il comporte au moins les étapes consistant à cycliquement :
a- Balayer le champ de vision par scanning (44)(45)(T1)(T2)
b- Enregistrer les positions des échos des balises (793)(795).

10. Procédé de commande pour un système de localisation et guidage pour engin ou entité mobile selon l'une quelconque des revendications 2 à 8, **caractérisé en ce qu'**il comporte au moins les étapes consistant à cycliquement :
a- Balayer le champ de vision par scanning (44)(45)(T1)(T2)
b- Enregistrer les positions des tores des balises (793)(795)
c- Focaliser le faisceau sur une balise et télé-alimenter la balise (43)(T3)
d- Recevoir un signal ultrasonore indiquant que la balise est bien alimentée (T4)(T5)(41)
e- Transmettre un signal de synchronisation vers ladite balise (42)(T6)
f- Recevoir la réponse ultrasonore de ladite balise (5)(41)(T8)
g- Calculer la distance et mettre à jour de la position de la balise (91, 92, 93, 94)
h- si une autre balise a été détectée, alors les étapes c-/ à g-/ sont répétées pour chaque balise.

## Claims

1. Localisation and guiding system for mobile entity comprising :
- at least a transducer device (10) positioned on the mobile entity (1),
- at least a 'marker' (20), positioned on a fixed or mobile element (2),
- at least an interaction (3,4,5) between the transducer (10) et and the marker (20),
the transducer device (10) comprising a laser transmission means (3), which orientation is controlled by control means,
the marker (20) being only remotely supplied by said laser transmission means (3) of the transducer device (10), and said marker having no own electric power supply source,
**characterized in that** said at least interaction (3,4,5) comprises the combination of :
- the reception by the marker (20) of a laser signal (3) transmitted by said transducer device (10), and
- the reception by said transducer device (10) of an ultrasonic signal (5) transmitted by the marker (20) responsive to said laser signal (3),
**and in that** the interaction (3,4,5) between the transducer (10) and the marker (20) allows to determine the position of the mobile entity (1) with regard to said marker (20), said position being known by :
- the angular position of the laser beam and
- the distance separating said transducer device (10) from said marker (20), said distance being deduced from the timing position of the reception by said transducer device (10) of said ultrasonic signal (5) transmitted by the marker (20).

2. Localisation and guiding system for mobile entity according to claim 1, **characterized in that**
- the marker (20) is provided with a reflective element (21) exhibiting a characteristic and omnidirectional light echo (4) adapted to be recognized among other echoes,
- the transducer device (10) comprises reception means adapted to identify this echo.

3. Localisation and guiding system for mobile entity according to claim 2, **characterized in that** the reflective element (21) of the marker has a torus shape.

4. Localisation and guiding system for mobile entity according to any of the claims 1 to 3, **characterized in that** it comprises a plurality of markers (20) and **in that** the transducer device (10) is adapted to have interactions (3,4,5) sequentially with each marker (20) of said plurality of markers.

5. Localisation and guiding system for mobile entity according to any of the claims 1 to 4, **characterized in that** the transducer device (10) comprises control means performing a periodic scan of an open solid angle (14) in order to identify the echo of one or several markers (20).

6. Localisation and guiding system for mobile entity according to any of the claims 1 to 5, **characterized in that** the interaction (3,4,5) between the transducer device (10) and the marker (20) further comprises :
- a synchronisation signal (42,T6) in the transmission of the coherent light laser beam (17,3,4)
- an identification element (46,T7) of the marker (20) in the ultrasonic signal (5).

7. Localisation and guiding system for mobile entity according to any of the claims 1 to 6, **characterized in that** the transducer device (10) is provided with mirrors (50,60;70,80) mounted on controlled movements adapted to direct the incident beam (17) in all the solid angle (14) constituting the vision field of the transducer device (10).

8. Localisation and guiding system for mobile entity according to any of the claims 1 to 7, **characterized in that** each marker (20) is provided with :
- a reflective element (21) exhibiting a characteristic and omnidirectional light echo (4) adapted to be recognized among other echoes,
- photoelectric means (24) for converting light energy into electric energy,
- a temporary energy storing reservoir capacitor (25),
- an ultrasonic transmitter (22)
- a control circuit (23) handling the reception of light signals and the transmission of ultrasonic signal (5),
- a non volatile memory (230) containing the identification elements of the marker (20).

9. Control method for localisation and guiding system for mobile entity according to any of the claims 1 to 8, **characterized in that** it comprises at least the steps consisting in cyclically :
a- Sweeping the vision field by scanning (44)(45)(T1)(T2)
b- Record the positions of the markers echoes (793)(795).

10. Control method for localisation and guiding system for mobile entity according to any of the claims 1 to 8, **characterized in that** it comprises at least the steps consisting in cyclically :
a- Sweeping the vision field by scanning (44)(45)(T1)(T2)
b- Record the positions of the markers echoes (793)(795).
c- Focusing the beam n a marker and remotely supplying the marker (43)(T3)
d- Receiving an ultrasonic signal indicating that the marker is correctly supplied (T4)(T5)(41)
e- Transmitting a synchronisation signal toward said marker (42)(T6) f- Receiving the ultrasonic response from said marker (5)(41)(T8)
g- Calculating the distance and updating the marker position (91, 92, 93, 94)
h- if another marker has been detected, then the steps c-/ to g-/ are repeated for each marker.

## Patentansprüche

1. Lokalisierungs- und Führungssystem für Mobileeinheit umfassend :
- mindestens eine am Mobileeinheit (1) aufgestellte Transducereinheit,
- mindestens eine an einem festen oder mobilen Element (2) aufgestellte Markierung (20),
- mindestens eine Interaktion (3,4,5) zwischen der Transducereinheit (10) und der Markierung (20),
wobei die Transducereinheit (10) Laserübertragungmittels (3) aufweist, deren Ausrichtung durch Steuerungmittels gesteuert wird,
wobei die Markierung (20) nur durch gesagte Laserübertragungmittels (3) von der Transducereinheit (10) entfernt versorgt wird, und gesagt Markierung keine eigene Spannungsversorgung hat,
**dadurch gekennzeichnet, dass** mindestens eine gesagte Interaktion (3,4,5) die Kombination von :
- dem Empfang an die Markierung (20) von einem durch gesagte Transducereinheit (10) übertragene Laserssignal (3), und
- dem Empfang an die gesagte Transducereinheit (10) von einem durch gesagte Markierung (20) übertragenen Ultraschallsignal (5), welches reaktionsfähig auf das gesagte Laserssignal (3) ist,
aufweist,
**und dass** die Interaktion (3,4,5) zwischen der Transducereinheit (10) und der Markierung (20) ermöglicht, die Position von der Mobileeinheit (1) in Bezug auf die gesagte Markierung (20) zu feststellen, und dass die gesagte Position durch :
- die winklige Position von dem Laserstrahl und
- den Abstand zwischen der gesagten Transducereinheit (10) und der gesagten Markierung (20), welcher durch die Zeitposition vom Empfang an die gesagte Transducereinheit (10) vom durch die Markierung (20) übertragenen Ultraschallsignal (5) abgeleitet wird,
bekannt ist.

2. Lokalisierungs- und Führungssystem für Mobileeinheit nach Anspruch 1, wobei
- die Markierung (20) ein reflektives Element (21) aufweist, welches ein eigenes und ungerichtetes Leuchteecho (4) auslegt, wodurch das Echo mitten unter anderen Echos erkannt werden kann,
- die Transducereinheit (10) Empfangmittels aufweist, welche geeignet zu dieser Echo erkennen werden.

3. Lokalisierungs- und Führungssystem für Mobileeinheit nach Anspruch 2, wobei das reflektive Element (21) der Markierung torusformig ist.

4. Lokalisierungs- und Führungssystem für Mobileeinheit nach einem der Ansprüche 1 bis 3, **dadurch gekennzeichnet, dass** er ein Vielzahl von Markierungen (20) umfasst und dass die Transducereinheit (10) so angeordnet ist, um folgerichtig mit jeder Markierung (20) vom Vielzahl von Markierungen Interaktionen (3,4,5) zu haben.

5. Lokalisierungs- und Führungssystem für Mobileeinheit nach einem der Ansprüche 1 bis 4, **dadurch gekennzeichnet, dass** die Transducereinheit (10) Steuerungmittels umfasst, welche regelmäßig Abfragung durch einen offenen Raumwinkel (14) arbeiten, wobei das Echo einer oder mehrerer Markierungen fesstellen kann.

6. Lokalisierungs- und Führungssystem für Mobileeinheit nach einem der Ansprüche 1 bis 5, **dadurch gekennzeichnet, dass** die Interaktion (3,4,5) zwischen der Transducereinheit (10) und der Markierung (20) ferner umfasst :
- ein im übertragenen Lasersstrahl (17,3,4) Synchronisationsignal (42,T6),
- ein im Ultraschallsignal (5) Identifikationelement (46,T7) der Markierung (20).

7. Lokalisierungs- und Führungssystem für Mobileeinheit nach einem der Ansprüche 1 bis 6, **dadurch gekennzeichnet, dass** die Transducereinheit (10) Speigels (50,60;70,80) umfasst, welche an gesteuerter Drehbewegungen festgelegt sind, und die die beiläufig Laserstrahl (17) in ganz Raumwinkel (14) als Sichtbereich der Transducereinheit (10) ausrichten kann.

8. Lokalisierungs- und Führungssystem für Mobileeinheit nach einem der Ansprüche 1 bis 7, **dadurch gekennzeichnet, dass** jede Markierung (20) umfasst :
- ein reflektives Element (21) mit einem eigenen und ungerichteten Leuchteecho (4), welches mitten unter anderen Echos erkannt werden kann,
- Fotoelektrischmittels (24), um Leuchtenergie in Electrishenergie zu wandeln,
- einen vorläufig Energiespeicherkondensator (25),
- einen Ultraschallsender (22)
- einen Steuerkreis (23), welcher den Empfang des Leuchtsignals und die Übertragung des Ultraschallsignals (5) arbeitet,
- einen nichtflüchtiger Speicher (230), welcher die Identificationelementen der Markierung (20) umfasst.

9. Steuerungverfahren für Lokalisierungs- und Führungssystem für Mobileeinheit nach einem der Ansprüche 1 bis 8, **dadurch gekennzeichnet, dass** er mindestens den Schritt aufweist, der periodisch umfasst :
a- abtasten den Sichtbereich durch Abfragung (44)(45)(T1)(T2)
b- speichern die Positionen der Markierungsechos (793)(795).

10. Steuerungverfahren für Lokalisierungs- und Führungssystem für Mobileeinheit nach einem der Ansprüche 1 bis 8, **dadurch gekennzeichnet, dass** er mindestens den Schritt aufweist, der periodisch umfasst :
a- abtasten den Sichtbereich durch Abfragung (44)(45)(T1)(T2) b- speichern die Positionen der Markierungsechos (793)(795).
c- fokussieren den Strahl an eine Markierung und fernversorgen die Markierung (43)(T3)
d- empfangen ein Ultraschallsignal, die anzeigt, dass die Markierung korrekte Versorgung hat, (T4)(T5)(41),
e- übertragen ein Synchronisationsignal an die gesagte Markierung (42)(T6)
f- empfangen die Ultraschallantwort vom der gesagten Markierung (5)(41)(T8) g- ausrechnen den Abstand und aktualisieren die Markierungsposition (91, 92, 93, 94)
h- wenn eine andere Markierung aufgedeckt werden ist, dann die Schritten c-/ zu g-/für jede Markierung wiederholt werden.
